# DEMANDE DE BREVET EUROPEEN

(11) **EP 1 420 547 A1**
(43) Date de publication de la demande: **19.05.2004**
(21) Numéro de dépôt: 03104209.6
(22) Date de dépôt: 14.11.2003
(51) Int. Cl.: H04L 12/26, H04L 29/06

(54) **Procédé d'analyse récursive et statistique de communications réseaux**

(30) Priorité: 15.11.2002 FR 0214343
(71) Demandeur: Thales, 92200 Neuilly Sur Seine (FR)
(72) Inventeur: Remi, Frédéric, 94117 Arcueil (FR); Tessereau, Cyril, 94117 Arcueil (FR)
(74) Mandataire: Dudouit, Isabelle

(57) **Abrégé**

Procédé et dispositif d'analyse des flux de données dans un réseau de communication modélisé par plusieurs couches comportant au moins les étapes suivantes :
- capturer un flux de données,
- pour une couche du réseau donnée, analyser la globalité du flux afin de déterminer le ou les protocoles présents,
- produire différents flux correspondant à au moins un protocole présent,
- réitérer l'étape d'analyse pour une éventuelle couche supérieure.

## Description

L'invention concerne un procédé de reconnaissance et d'analyse de communications réseaux, tels que Ethernet, TCP/IP,...

L'invention est utilisable, par exemple, pour la mise en oeuvre de chaînes intégrées d'acquisition, d'analyse et de renseignement. Elle permet d'assurer en temps réel toutes les fonctions complémentaires de la surveillance active et passive d'un réseau :
- profilage des communications, réseaux et utilisateurs ;
- aide au datamining ( équivalent en Français de "extraction, indexation et exploration sémantique') des informations transitant sur un réseau ;
- aide au monitoring (équivalent français de contrôle et audit) et à la détection d'intrusion.

Elle s'applique notamment pour l'écoute de flux sécurisés.

En règle générale dans un système de surveillance d'un réseau, on cherche, à l'aide d'un analyseur, à extraire du flux de trames écouté certaines informations significatives des utilisateurs émettant et recevant le flux. L'approche évidente et connue pour cette opération est de présupposer que le flux répond à un des modèles réseaux existants. Dès lors, chaque trame est isolée, puis l'analyseur en remonte les couches de façon systématique. Si cette méthode offre une certaine simplicité, elle présente toutefois certaines limites, notamment :
- l'impossibilité d'analyser des flux contenant des protocoles non conformes aux standards ou aux normes ;
- la non restitution des flux, l'analyse de chaque trame étant prise indépendamment.

Les fonctionnalités des produits existants, tels que les analyseurs réseau : par exemple Ethereal (Ethereal est le nom d'un logiciel libre sous license publique GPL), Surveyor marque déposée par la société Shomiti, se limitent à l'identification simple de paquets isolés transitant sur le réseau. S'ils s'avèrent performants, ils ne prennent toutefois pas en compte la notion de flux (lecture de champs, sans gestion du comportement de l'application en émission/réception des données ou de la diffusion d'information entre plusieurs paquets dans la plupart des cas). Par conséquent, l'accès au contenu, c'est à dire l'accès aux données de l'utilisateur transmises dans le flux par les applications à l'aide du protocole IP, est limité.

D'autre part, les produits existants analysent les paquets de la même façon que les piles de protocole standard. Ils ne possèdent donc aucune capacité d'adaptation à des situations non-standard ni aucune 'intelligence' dans le traitement. Les automates n'ont pas de capacités de synthèse ou consolidation de l'information. Cette fonction est laissée à l'application utilisatrice, c'est à dire au dessus des protocoles. Sous l'expression « non standard » on entend, dans le contexte de la présente description, des applications spécifiques utilisant des versions modifiées de protocoles, restant routables sur les réseaux IP (Internet Protocol) mais n'étant pas interopérables avec d'autres applications.

L'invention propose une nouvelle approche qui repose notamment sur une analyse globale des flux (flux de trames des données échangées dans un réseau).

Pour cela elle permet une analyse des communications dans un réseau à l'échelle de flux entiers, en mettant en oeuvre des principes notamment :
- d'analyse en largeur couche par couche, par exemple, dans le modèle TCP/IP et non paquet par paquet ;
- de caractérisation statistique des flux, incluant une analyse sémantique des variantes de protocole et une analyse comportementale de la dynamique des échanges.

L'invention concerne un procédé d'analyse des flux de données dans un réseau de communication modélisé par plusieurs couches. Il est caractérisé en ce qu'il comporte au moins les étapes suivantes :
- capturer un flux de données,
- pour une couche du réseau donnée, analyser la globalité du flux afin de déterminer le ou les protocoles présents,
- produire différents flux correspondant à au moins un protocole présent,
- réitérer l'étape d'analyse pour une éventuelle couche supérieure.

Le procédé comporte par exemple les étapes suivantes :
1) analyser le paquet capturé,
   1.a) si le paquet n'est pas reconnu, passer au paquet suivant,
   1.b) si le paquet est reconnu, supprimer le paquet du flux capturé, rechercher un flux existant pour insérer le paquet,
   s'il n'existe pas de flux existant générer un nouveau flux,
2) analyser les flux générés à l'étape 1),
3) libérer les ressources.

L'analyse globale des flux est par exemple réalisée à l'aide de tests d'analyse statistique ou protocolaires.

Le procédé s'applique pour analyser des données dans un réseau ayant le protocole TCP/IP.

L'invention concerne aussi un dispositif d'analyse de flux de données dans un réseau de communications pouvant être modélisé par plusieurs couches caractérisé en ce qu'il comporte au moins un processeur adapté à mettre en oeuvre le procédé tel que décrit ci-dessus.

L'invention présente notamment les avantages suivants :
- Elle s'adapte à différentes structures de flux IP, standards ou non, avec la discrimination entre les flux sécurisés et les flux non protégés à tous les niveaux de la pile (reconnaissance clair/chiffre),
- Elle permet la recherche d'informations de nature cryptographique, dont la reconnaissance du type d'algorithmie permettant d'assurer les services de confidentialité et d'intégrité (pour des standards de chiffrement par blocs, tels que AES (ADVANCED ENCRYPTION STANDARD), DES (DATA ENCRYPTION STANDARD) pour des standards de fonction de hachages, par exemple SHA (Secure Hash Algorithm), MD5 (Message Digest 5),
- Elle produit des rapports d'audits synthétiques directement exploitables par un administrateur ou un officier de sécurité. Ces rapports sont par exemple fournis en récapitulant les règles générées pour les flux et paquets, présentées dans une synthèse sous un format lisible par un opérateur, et filtrable éventuellement en fonction de certains critères d'affichage.
Elle offre :
- Une identification évolutive : la possibilité de s'adapter à la reconnaissance de protocoles non-standards (analyse de structures),
- Une architecture ouverte : enrichissement in situ de l'outil par ajout de composants dédiés à un nouveau protocole ou à une nouvelle méthode d'analyse,
- La capacité d'analyser des flux contenant des protocoles seulement partiellement conformes aux standards ou normes, ou des systèmes de protocoles utilisant des structurations en couches spécifiques,
- L'orientation de l'analyse sur les flux et non sur les trames, ce qui permet d'obtenir des informations sur les automates liés aux protocoles et sur les comportements applicatifs,
- Chaque étape de traitement est indépendante des étapes passées ou futures, ce qui permet de prendre en compte tous les types de protocoles et la possibilité d'encapsulation indépendamment de la complexité du flux réseau analysé.

D'autres caractéristiques et avantages de l'invention apparaîtront mieux à la lecture de la description qui suit d'un exemple de réalisation non limitatif annexé des figures qui représentent :
- La figure 1 un exemple de représentation de l'arbre protocolaire mis en oeuvre pour l'invention,
- La figure 2 un exemple de modèle simplifié de l'architecture de traitement,
- La figure 3 un diagramme de séquence sur le tri des paquets,
- La figure 4 un exemple de résultat obtenu par la mise en oeuvre du procédé selon l'invention.

L'idée mise en oeuvre dans le procédé selon l'invention repose notamment sur l'utilisation des méthodes de reconnaissance sémantique et statistique permettant la caractérisation des protocoles de la pile TCP/IP (Transmission Control Protocol/internet Protocol).

L'invention se caractérise par la nouvelle approche suivante, dans le cas d'un fonctionnement normal aucune hypothèse n'est faite sur la structure en couche des trames. Au contraire, celle-ci est déduite, par exemple, d'une analyse des trames à la recherche de motifs représentatifs décrits dans des signatures de protocoles. Ainsi, l'invention analyse la globalité du flux en essayant de déterminer le ou les protocole(s) de plus bas niveau présent(s) (par exemple physique). Le flux est alors séparé en fonction des protocoles identifiés et l'analyse est réitérée pour une éventuelle couche supérieure. Au fur et à mesure que la structuration en couche est retrouvée, le flux dans son ensemble est vérifié et découpé en fonction des couches reconnues.

De manière à mieux faire comprendre les étapes du procédé selon l'invention, l'exemple donné concerne l'analyse de flux de données dans le cadre du protocole TCP/IP, au sein d'un analyseur adapté comportant un processeur programmé pour exécuter les étapes du procédé, ceci à titre illustratif et nullement limitatif.

### Modèle général des traitements

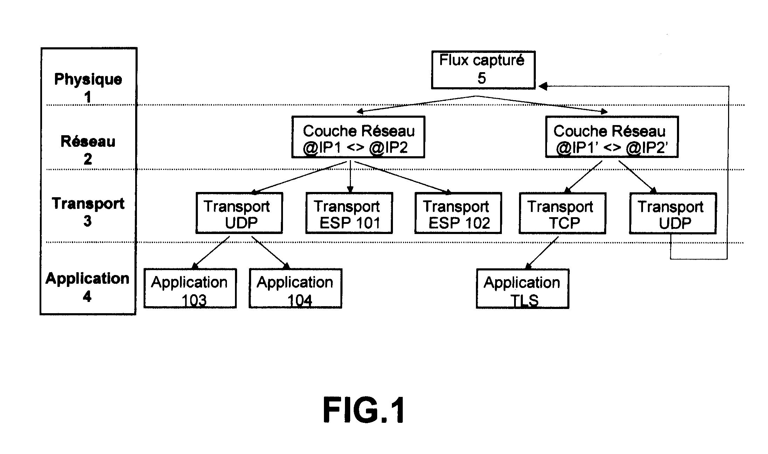

La figure 1 schématise un exemple d'arbre protocolaire selon l'invention représentant les flux analysés. Les étapes du procédé consistent notamment à :
- construire un arbre protocolaire représentant les flux analysés; un noeud de l'arbre correspond aux paramètres caractéristiques d'un flux analysé et une branche à la représentation des flux traités,
- effectuer un parcours en largeur de l'arbre afin d'en extraire l'information pertinente, à savoir l'identification : des trames (adresses IP), des services fournis par la couche de réseau (option IP de routage, par exemple pour demander au réseau un routage spécifique plutôt que de laisser les routeurs décider d'eux-même de l'itinéraire emprunté), des événements spéciaux ou inhabituels (renouvellement de clé de chiffrement, rupture de flux, attaque en rejeu sur un flux chiffré), autrement dit le contenu des règles.

Les étages de l'arbre protocolaire correspondent par exemple aux couches réseau de la pile TCP/IP : la couche physique 1, la couche réseau 2, la couche transport 3, la couche application 4. La racine 5 de l'arbre protocolaire correspond au niveau où est réalisée la capture de flux. Par exemple, dans le cas d'un flux Ethernet la racine est au niveau physique (couche physique 1).

Dans un flux réseau, l'information est véhiculée dans des structures élémentaires appelées 'trames'. Ces trames sont émises une à une sur le lien physique, chacune de façon indépendante. En fonction du medium utilisé pour la circulation de l'information, la trame peut être précédée de silences et/ou de préambules de synchronisation : ces signaux liés au medium existent pour des considérations de traitement de signal. Dans la terminologie réseau, un bloc d'information transféré prend un nom différent suivant la couche OSI qui le manipule : au niveau physique on parle de trame, au niveau réseau de paquet ou de datagramme. Le niveau transport manipule des segments, et au niveau application on considère des messages. Les termes trame et paquet désignent une même entité de données.

Les flux considérés par le procédé selon l'invention sont, par exemple, des séquences de trames épurées des signaux liés au médium.

Un flux de données est divisé en :
- Un nombre variable de paquets (chaque paquet représente une trame réseau),
- Un nombre variable de règles (initialement aucune, les règles sont créées par le moteur d'analyse comme il est décrit ci-après).

Chaque trame possède une structure interne qui correspond à un système stratifié : les réseaux sont basés sur des modèles en couches. Les deux modèles de réseaux existant actuellement sont le modèle normalisé OSI de l'ISO et le système de protocoles standardisés TCP/IP. Le principe d'un modèle en couche est de décomposer l'ensemble des traitements de transmission/réception en plusieurs modules représentant une couche et ayant chacun un rôle précis. Ces modules exécutent leurs tâches spécifiques en séquence.

Les données ou paquets d'informations qui circulent sur le réseau sont traités successivement par chaque couche, selon un ordre fixe. Chaque couche du modèle possède un niveau d'abstraction spécifique (par exemple : lien physique, flux de transport, session d'application...) et communique avec les couches de niveaux d'abstraction adjacents. Ceci correspond à la notion de couche 'inférieure' et de couche 'supérieure'. Chaque couche utilise ainsi les services des couches inférieures et fournit des informations à la couche de niveau supérieur.

| couche | Niveau d'abstraction | Fonction |
|---|---|---|
| 1 | physique | définit la façon de laquelle les données sont converties en signaux électriques, optiques... |
| 2 | réseau | permet de localiser une machine dans un réseau et de gérer le routage entre deux machines. |
| 3 | transport | chargée du transport des données entre une application cliente et une application serveur |
| 4 | Application | assure l'interface avec les applications |

L'information que l'on souhaite échanger par le réseau est par exemple une donnée d'application, c'est à dire une information brute de l'utilisateur (fichier stocké sur un disque, texte d'un courrier électronique, son et vidéo d'une visioconférence...). Cette information est traitée successivement par toutes les couches du modèle depuis l'application (couche 4 dans l'exemple ci-dessus) jusqu'au niveau physique (couche 1). Chaque couche de l'émetteur de la trame produit au cours de son traitement des informations destinées à la couche correspondante du récepteur (par exemple des informations de détection d'erreur de transfert, accusés de réception...).

A l'émission, ces informations sont regroupées dans un bloc structuré appelé 'en-tête' selon un 'protocole' donné. Cet en-tête est rajouté au bloc de données reçu du niveau supérieur, puis l'ensemble est transmis au niveau inférieur.

En réception, l'en-tête est extrait du bloc de données reçu du niveau inférieur et est consommé, c'est à dire utilisé par le niveau courant pour déterminer le service à fournir (autrement dit : savoir comment traiter le contenu du bloc et à quel service le donner après). Finalement, l'en-tête est détruit et l'information restante (les données du bloc sans l'en-tête) est transmise au niveau supérieur pour traitement.

De cette façon, une trame est une succession d'en-têtes de protocoles, chacun étant suivi par la donnée applicative 'utilisateur'.

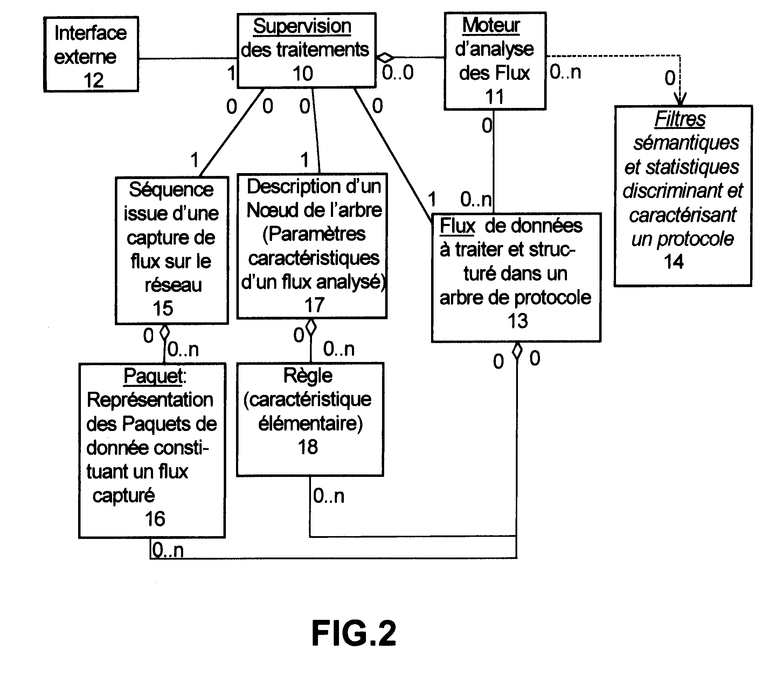

La figure 2 modélise de manière simplifiée un exemple d'architecture de traitement du flux selon l'invention. Les conventions utilisées dans cette figure 2 sont issues du modèle UML (Unified Modeling Langage : langage unifié de modélisation d'objets). Le modèle UML est normalisé et édité par un groupement baptisé OMG (Object Management Group).

Le procédé selon l'invention ou application est partagé entre un processus de supervision 10 et un moteur d'analyse 11 de flux qui se répartissent les traitements.

Le processus de supervision 10 est contrôlé par l'environnement d'exploitation à travers une interface externe 12. Il traite un flux parmi la liste des flux capturés, matérialisé par le lien 10 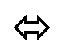 13 et en constitue une représentation à travers :
- Une séquence de paquets 15 issue des paquets 16 du flux 13. Par définition, 13 est une liste de paquets 16. Le superviseur, lorsque les paquets sont éliminés d'un flux, les garde dans une séquence 15 en attendant de les insérer dans un nouveau flux.
- Un arbre protocolaire qui positionne les flux entre eux à l'aide des relations entre noeuds 17 correspondants de l'arbre. Chaque noeud pointe par ailleurs sur les règles 18 du flux 13. Le lien entre 10 et 17 représente le lien permettant au superviseur de se déplacer dans l'arbre. C'est initialement le lien entre le superviseur et la racine, et au fur et à mesure que de nouveaux noeuds sont créés, le superviseur se déplace. Le lien entre 17 et 18 permet d'attacher les règles à un flux. Le contenu de la règle est, par exemple, une suite de couples {nom = valeur} telle que par exemple « Adresse Source=d,C0A80001 » (un exemple détaillé est donné en fin de la description). Ces couples sont fournis par la signature du protocole : chacun est le résultat de l'application d'un 'test' ou 'filtre' dédié, la collection de tous les filtres et leur ordre d'enchaînement constituant la signature. Par exemple ici, il existe dans la signature du protocole IP un filtre 'adresse_source' qui, appliqué à un paquet, renvoie le message ci-dessus.

Le moteur d'analyse 11 de flux lit à un moment donné un fichier 13 de flux en provenance de la supervision et peut en créer un nombre variable. Ces derniers sont ajoutés à la liste des flux manipulés. Le moteur d'analyse de flux peut charger en mémoire de façon dynamique un nombre variable de filtres 14 (par exemple sous forme de DLLs, ou Dynamic Link Library) qui lui permettent de traiter le flux considéré. Les filtres sont par exemple des filtres sémantiques et statistiques discriminants et caractérisant un protocole.

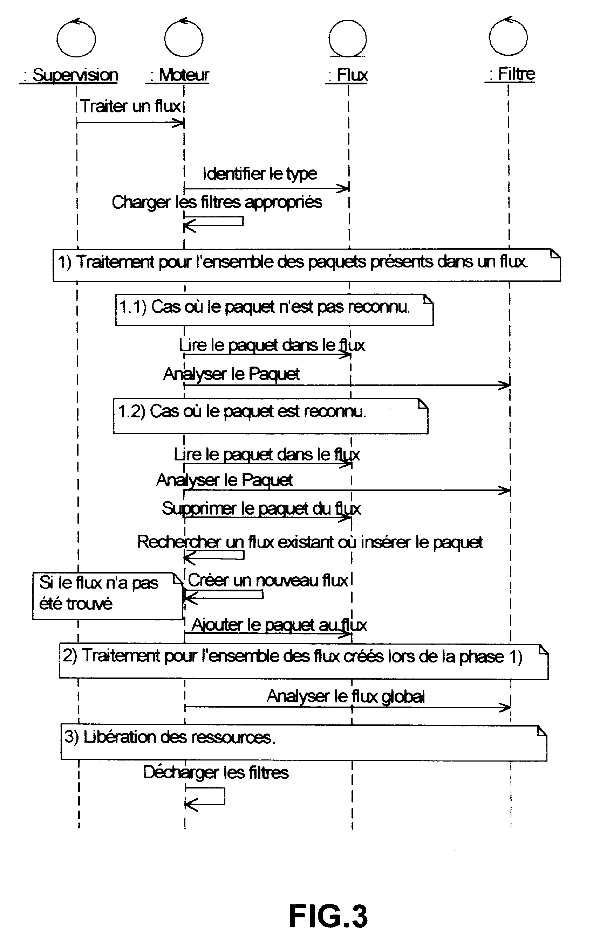

La figure 3 représente un exemple de diagramme de séquence sur le tri des paquets contenus dans les trames véhiculées par le médium. Ce tri est effectué par le processus appelé 'moteur',
- qui accepte en paramètre :
   - un fichier de capture de flux réseau, comportant par exemple une séquence de paquets IP,
   - un niveau de traitement (couche du modèle TCP/IP à traiter) ; cette information est donnée par l'opérateur. Par exemple l'IHM (Interface Homme Machine) demande à l'opérateur le nom du fichier de capture puis lui propose une liste de niveaux parmi laquelle il choisit,
   - un arbre protocolaire, initialement 'vide', c'est à dire réduit à une racine située au niveau de traitement sélectionné. En d'autres termes, l'on initialise le système en lui donnant une racine définie en fonction du numéro de couche précédemment choisi.
   et
- qui fournit en sortie l'arbre complété, c'est à dire assortit de nouvelles branches assurant la représentation des flux traités.

Sur le diagramme de la figure 3 les différentes étapes du procédé permettant de construire les nouvelles branches de l'arbre sont par exemple et en résumé les suivantes :
0 - Le superviseur envoie un ordre de traitement d'un flux capturé,
   Phase 1
      1 - le moteur lit le paquet, analyse le paquet à l'aide des filtres chargés puis selon le résultat des filtres (décision 'reconnu' ou 'non-reconnu'),
      1a - Si le paquet n'est pas reconnu, le moteur passe au paquet suivant,
      1b - Si le paquet est reconnu le moteur supprime le paquet du flux et recherche un flux existant pour insérer le paquet reconnu. Dans le cas où le moteur ne trouve pas de flux existant, alors il génère un nouveau flux dans lequel il insère le paquet. Enfin, le moteur passe au paquet suivant.

      On teste un paquet pour chaque protocole (donc pour chaque signature, c'est à dire un ensemble de filtres) jusqu'à obtenir une décision 'reconnu'. Par exemple, en transport, si on charge les filtres UDP (User Datagram Protocol) puis les filtres TCP (Transmission Control Protocol), on va d'abord appliquer au paquet les filtres UDP. Si la réponse est 'reconnu', on le met dans un flux approprié et on passe au paquet suivant. Si 'non-reconnu', on recommence avec les filtres TCP...
      Si TCP dit alors 'non-reconnu', le paquet reste dans le flux et on passe au paquet suivant.
   Phase 2 = A l'issue de la phase 1 le procédé possède un ensemble de flux qu'il analyse globalement à l'aide des filtres chargés. Les différents flux constituent les différentes branches de l'arbre.
      Après avoir réalisé l'étape 1, le flux d'origine est réduit : tous les paquets reconnus ayant été extraits et déplacés (ou regroupés) dans d'autres flux. Il n'y reste que des paquets non reconnus, voire aucun paquet. On se retrouve donc avec un flux d'origine 'réduit' et une série de nouveaux flux 'fils'. Ces flux sont dits 'regroupés'.
   Phase 3 = la libération des ressources - on décharge tous les filtres et on libère toute la mémoire qu'ils auraient pu utiliser.

Il existe par exemple deux types de filtres, les filtres en mode paquet et ceux en mode flux. Les premiers servent à dire si le paquet est 'reconnu' ou 'non-reconnu' pour le protocole et permettent de donner un identifiant (en résumé relativement à l'exemple en fin : le nom qui sert à renommer le flux et le fichier enregistré sur le disque, comme par exemple "IP_C0A80001_C0A80064,UDP_01F4_01F4"). En mode flux, on va donner des renseignements supplémentaires (la règle se voit ajouter de nouveaux couples). Par exemple, c'est dans ce mode flux qu'un filtre va pouvoir dire que 'TOS = 0' et qu'un autre va établir 'options IP = absent'.

Le moteur utilise dans une première passe, cf. phase 1) du diagramme de séquence, les informations explicites de chaque datagramme pris indépendamment (identification reposant sur des signatures sémantiques de protocole, appelées : 'filtres de paquets'). Il n'opère aucun recoupement, aucune analyse statistique ou aucun traitement approfondi sur la nature des datagrammes mais effectue toutefois les tâches de réassemblage des fragments IP / segments TCP.

Lorsqu'un flux est regroupé par le processus 'moteur', c'est à dire chacun des flux de l'ensemble obtenu en 2) ce dernier réalise en deuxième passe une analyse globale, cf. phase 2) du diagramme de séquence, à l'aide de tests d'analyse statistique ou protocolaire ('filtres de flux') permettant de discriminer les paramètres utiles du protocole considéré au vu du flux complet.

Enfin, le processus 'moteur' épure l'arbre en collectant puis en supprimant les listes de datagrammes correspondant à des protocoles identifiés sans ambiguïté. Les listes de données collectées, correspondant aux paquets qui ont été reconnus sont fournies en sortie avec leurs caractéristiques. Les datagrammes de branches non identifiées sont exportés tels quels (pour analyse éventuelle avec un autre outil compatible ou après enrichissement de la base de signatures).

### Traitements détaillés

Pour déterminer le protocole relatif à une couche réseau, l'invention exploite une base de signatures de protocoles, une signature est une collection de filtres, certains par 'paquets' (ils ne traitent qu'un paquet à la fois), certains par 'flux' (ils ont besoin de tous les paquets simultanément). Ces signatures comprennent un ensemble de tests dont l'objectif est triple :
- déterminer si une trame, pour la couche analysée, utilise le protocole signé (verdit oui / non) ;
- déterminer des informations significatives du protocole reconnu pour la trame (comme l'identification de l'émetteur et du destinataire, l'utilisations de certains modes ou options...). Ces informations sont regroupées dans une règle associée au paquet ;
- déterminer des informations significatives du protocole pour le flux (comme des ruptures de séquence non conformes aux automates standards...). Ces informations sont regroupées dans une règle associée au flux ;

Le traitement d'un flux étant décomposé en couches, il est récursif, et chaque étape de la récursivité comprend les opérations suivantes (cf. figure 3) :
- récupération de la liste des protocoles susceptibles d'apparaître au niveau considéré ;
- analyse trame par trame du flux, où chaque trame est confrontée séquentiellement à toutes les signatures de protocoles envisagées jusqu'à ce qu'un verdict positif soit prononcé ;
- récupération de la règle par paquet de chaque trame reconnue ;
- classification des trames en fonction des règles : toutes les trames ayant le même protocole et la même règle par paquet sont déplacées dans un flux distinct (un flux 'non reconnu' concentre le reliquat éventuel) ;
- analyse globale de chacun des flux ainsi extraits par rapport à son protocole reconnu, puis association de la règle de flux issue de l'analyse.

On voit que pour un flux entrant, plusieurs flux sortants peuvent être générés par l'invention : la relation de filiation entre le flux entrant et le(s) flux sortant(s) est enregistrée sous forme d'arbre.

### Illustration du principe de l'invention sur un exemple

On suppose qu'un flux de capture C contient trois trames : deux issues du système de protocole TCP/IP pour une application non signée ; et une trame issue d'un modèle non IP. Ce flux est produit et enregistré sous la forme suivante :
Trame 1 = IP(a→b)/TCP(s→d)/?
Trame 2 = IP(a→b)/TCP(s→e)/?
Trame 3 = ?
où la convention de représentation est :
les protocoles sont listés de gauche à droite depuis le plus bas niveau vers le plus haut ;
le protocole signé P spécifiant l'envoi de données depuis sa source S vers la destination D est noté par P(S→D) ;
un protocole non reconnu est noté ?

On suppose également dans l'exemple que l'invention est instrumentée des protocoles suivants :
Couche 2 réseau : IP ;
Couche 3 transport : UDP, TCP ;
Couche 1 application : HTTP.

On précise que le premier protocole supposé présent est un protocole de réseau.

Initialement, le procédé selon l'invention considère le flux C comme :
Trame 1 = ?
Trame 2 = ?

Le moteur charge la signature du protocole IP et l'applique à la trame 1.

Le verdict est positif et la règle associée est : IPsource=a, IPdestination=b.

Un nouveau flux IPab est créé : la trame 1 est supprimée du flux C et déplacée dans le flux IPab.

Puis la trame 2 est confrontée à la signature de IP. Le verdict est positif et la règle associée est : IPsource=a, IPdestination=b.

Comme le flux IPab pour IP associé à cette règle existe, la trame 2 y est déplacée.

Enfin la trame 3 est confrontée à la signature de IP. Le verdict est négatif, cependant l'invention ne possède pas d'autres signatures, donc la trame 3 est laissée comme non reconnue au niveau réseau.

Toutes les trames étant traitées, l'invention effectue l'analyse des flux crées : le flux IPab est confronté à la signature de IP. Le résultat est une règle de flux : 'TTL=64,options=aucune'.

A la fin de cette étape, il existe donc deux flux :
IPab(IP :TTL=64,options=aucune) :
Trame 1 = IP(a→b)/?
Trame 2 = IP(a→b)/?
C:
Trame 3 = ?

Ces flux sont enregistrés comme fils du flux C.

UDP et TCP étant susceptibles d'apparaître au niveau supérieur à IP, l'invention procède à une nouvelle étape de traitement :

L'invention charge la signature des protocoles UDP et TCP

L'invention applique la signature UDP à la trame 1.

Le verdict est négatif, donc la signature de TCP est appliquée.

Le verdict est positif et la règle associée est : TCPsource=s,TCPdestination=d.

Un nouveau flux IPab,TCPsd est créé : la trame 1 est supprimée du flux IPab et déplacée dans le flux IPab,TCPsd.

Le procédé applique la signature UDP à la trame 2.

Le verdict négatif, donc la signature de TCP est appliquée.

Le verdict est positif et la règle associée est : TCPsource=s,TCPdestination=e.

Le flux existant IPab,TCPsd ne convenant pas, un flux IPab,TCPse est créé : la trame 1 est supprimée du flux IPab et déplacée dans le flux IPab,TCPse.

Le flux IPab,TCPsd est confrontée à la signature de TCP. Le résultat est une règle de flux vide. De même pour IPab,TCPse.

A la fin de cette étape, il existe donc trois flux :
IPab,TCPsd(IP :TTL=64,options=aucune ;TCP :vide) :
Trame 1 = IP(a→b)/TCP(s→d)/?
IPab,TCPse(IP :TTL=64,options= aucune ;TCP :vide) :
Trame 1 = IP(a→b)/TCP(s→e)/?
C:
Trame 3 = ?

Les flux IPab,TCPsd et IPab,TCPse sont enregistrés comme fils du flux IPab.

Les trames de IPab ayant été entièrement consommé, IPab disparaît en tant que flux. Cependant, le noeud correspondant est conservé dans l'arbre avec sa règle de flux.

L'invention procède à une dernière étape de traitement pour les deux flux venant d'être créés. De la même façon que pour la trame 3, la confrontation à la signature de HTTP échoue et les flux sont laissés inchangés.

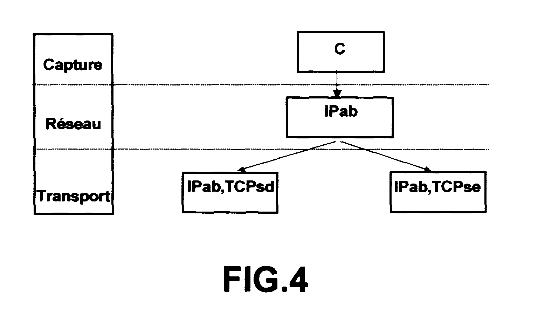

Comme tous les flux existant ont été traités complètement, la liste précédente constitue le résultat final de l'analyse et l'arbre protocolaire associé est illustré à la figure 4.

### Variante de réalisation

L'invention décrite pour le modèle TCP/IP, dont on adopte ici la terminologie spécifique, peut être également adaptée au modèle OSI car les deux modèles présentent des similitudes fortes dues à une élaboration partiellement commune.

Pour exemple, les couches du modèle le plus complet sont détaillées : le modèle OSI.

| couche | Niveau d'abstraction | Fonction |
|---|---|---|
| 1 | physique | définit la façon de laquelle les données sont converties en signaux électriques, optiques... |
| 2 | liaison données | définit l'interface avec la carte réseau et permet d'identifier une carte réseau parmi plusieurs connectées sur un même lien |
| 3 | réseau | permet de localiser une machine dans un réseau et de gérer le routage entre deux machines. |
| 4 | transport | chargée du transport des données entre une application cliente et une application serveur |
| 5 | session | définit l'ouverture des sessions des clients sur un serveur |
| 6 | Présentation | définit le format des données (leur représentation) |
| 7 | Application | assure l'interface avec les applications |

Le procédé selon l'invention offre de nouveaux procédés d'analyse des communications :
- La reconnaissance et discrimination récursive des protocoles de la pile TCP/IP dont par exemple la remontée de tout type de *tunnelling.*
- La reconnaissance statistique des caractéristiques des protocoles de la pile TCP/IP et discrimination statistique entre variantes de protocoles. L'invention permet notamment une discrimination entre le standard de sécurité pour IP ESP et des implémentations spécifiques (ex : Chiffreur IP THALES Mistral).
- La possibilité d'être mise en oeuvre dans différents réseaux de communications pouvant être modélisés par couche.

Afin de préciser le concept de règle utilisé dans la présente description un exemple concret est donné ci-après. Les choix d'implémentation ne sont pas exclusifs de l'invention, aussi ils sont à prendre uniquement à titre indicatif pour une meilleure compréhension.

En entrée, on a analysé un flux de type 'UDP/IP', c'est à dire une communication IP envoyant des messages à travers le protocole de transport UDP. L'application utilisée sert à gérer les paramètres de la sécurité pour IPSec (par exemple : se mettre d'accord en gré à gré sur une clé de chiffrement. Cette application et le protocole qui la véhiculent sont baptisés tous deux ISAKMP.

L'analyse 11 a reconnu dans un premier temps un flux 13 IP (plus bas niveau protocolaire disponible dans les signatures, cf. 14) et a extrait une règle 18 dont le libellé est le suivant :
"IP_C0A80001_C0A80064 : Adresse Source=d,C0A80001|Adresse Destinati on=d,C0A80064|TOS=p,0|Options IP=p,absent".

(On remarquera que le format est pratiquement lisible tel quel, moyennant de faire les conversions hexadécimales et de connaître quelques conventions internes aux règles).

Cela étant fait, le flux a été réanalysé au niveau transport, et un flux UDP a été découvert. Une nouvelle règle 18 est alors créée pour l'étage
UDP:
"UDP_01F4_01F4 : Port Source=d,01F4|Port Destination=d,01 F4"

Dans le cas présent, la signature (filtres 14) qui aurait permis de rajouter une règle spéciale sur ISAKMP n'a pas été incluse, donc il n'y a pas de travail supplémentaire à faire sur le flux et l'analyse 11 s'arrête là.

A partir de ces deux règles, on rebaptise le flux
"IP_C0A80001_C0A80064,UDP_01F4_01F4"

Cet identifiant sert à le localiser dans l'arbre de protocole (label du noeud 17) et à le manipuler sous forme de fichier (via l'explorateur de Windows, on peut retrouver un fichier portant ce nom qui contient les trames de ce flux)

Lorsque le prototype a fini ses analyses, il affiche à l'opérateur une synthèse (présentement en HTML) pour le flux :
IP_C0A80001_C0A80064,UDP_01F4_01F4 :
IP
Définition :
Adresse Source : 192.168.0.1
Adresse Destination : 192.168.0.100
Règle par paquet
TOS:0
Options IP : absent
UDP
Définition
Port Source : 500, Internet Security Association and Key
Management Protocol (ISAKMP)
Port Destination : 500, Internet Security Association and Key
Management Protocol (ISAKMP)

On remarque que les informations affichées correspondent littéralement au contenu de la règle. L'affichage apporte à ce contenu 'brut' le confort d'une présentation en tableau avec quelques comodités pour la lecture (comme la conversion des adresses IP depuis l'hexadécimal ou le nom explicite du protocole ISAKMP reconnu).

L'invention concerne aussi un analyseur de réseau comportant au moins un processeur adapté à exécuter les différentes étapes du procédé décrit ci-dessus.

## Revendications

1. Procédé d'analyse des flux de données dans un réseau de communication modélisé par plusieurs couches **caractérisé en ce qu'**il comporte au moins les étapes suivantes :
• capturer un flux de données,
• pour une couche du réseau donnée, analyser la globalité du flux afin de déterminer le ou les protocoles présents,
• produire différents flux correspondant à au moins un protocole présent,
• réitérer l'étape d'analyse pour une éventuelle couche supérieure.

2. Procédé selon la revendication 1 **caractérisé en ce qu'**il comporte au moins les étapes suivantes :
1) analyser le paquet capturé,
1.a) si le paquet n'est pas reconnu, passer au paquet suivant,
1.b) si le paquet est reconnu, supprimer le paquet du flux capturé, rechercher un flux existant pour insérer le paquet,
s'il n'existe pas de flux existant générer un nouveau flux ,
2) analyser les flux générés à l'étape 1),
3) libérer les ressources.

3. Procédé selon la revendication 1 **caractérisé en ce qu'**il comporte au moins les étapes suivantes :
• récupérer la liste des protocoles susceptibles d'apparaître pour la couche ou le niveau considéré,
• analyser trame par trame le flux capturé, en confrontant séquentiellement une trame à toutes les signatures de protocole envisagées, tant que la trame n'est pas associée à une signature,
• récupérer la règle par paquet de chaque trame reconnue,
• classifier les trames en fonction des règles, et les positionner dans des flux distincts,
• analyser globalement les flux distincts en utilisant le ou les protocoles reconnus,
• associer la règle de flux issue de l'analyse.

4. Procédé selon l'une des revendications 1 à 3 **caractérisé en ce que** l'analyse globale des flux est réalisée à l'aide de tests d'analyse statistique ou protocolaires.

5. Utilisation du procédé selon l'une des revendications 1 à 4 à l'analyse de données dans un réseau ayant le protocole TCP/IP.

6. Dispositif d'analyse de flux de données dans un réseau de communications pouvant être modélisé par plusieurs couches **caractérisé en ce qu'**il comporte au moins un processeur adapté à mettre en oeuvre le procédé selon l'une des revendications 1 à 4.
